# EUROPEAN PATENT APPLICATION

(11) **EP 2 869 252 A1**
(43) Date of publication of application: **06.05.2015**
(21) Application number: 14189533.4
(22) Date of filing: 20.10.2014
(51) Int. Cl.: G06Q 10/10

(54) **Method and device for displaying information**

(30) Priority: 30.10.2013 CN 201310528373
(71) Applicant: Xiaomi Inc., Beijing 100085 (CN)
(72) Inventor: Zheng, Zhongxiang, 100085 Haidian District (CN); Zhang, Jianjun, 100085 Haidian District (CN); Li, Jinchao, 100085 Haidian District (CN)
(74) Representative: Robson, Aidan John

(57) **Abstract**

A method for displaying information comprises: receiving (101) an information display request of a terminal, the information display request carrying at least a target server identification and specified information; processing (102) the specified information to obtain rich text information of the specified information; and sending (103) a rich text display request to the target server, the rich text display request carrying at least the rich text information, such that the target server provides the rich text information. In the present invention, the specified information is processed by a process server to obtain the rich text information of the specified information, thus phenomenas such as crash or getting stuck caused by the terminal processing the specified information are avoided, resources of the terminal are saved. Since the terminal sends the specified information to the process server without sending the rich text information to the process server, data traffic of the terminal is reduced.

## Description

### TECHNICAL FIELD

The present disclosure relates to the field of network technology, and more particularly, to a method and a device for displaying information.

### BACKGROUND

With the development of network technology and the popularization of information display platforms, a user may display different types of information such as text information, pictures or audio files or the like on the information display platforms, and with increasing user needs, more and more users wish to convert simple text information into rich text information to be displayed, for example, to convert text information input by the user into a picture to be displayed.

A specific process for displaying the rich text information is that: a terminal converts the text information input by the user into a rich text information, and uploads the rich text information to a server associated with the information display platform, and then the server displays the rich text information on the information display platform.

The inventor finds out that there are at least problems as below which exist in the related art when implementing the present disclosure.

When the text information is converted into the rich text information, a lot of resources of the terminal will be occupied, phenomenas such as crash or getting stuck may easily occur, which influences the normal operation of the terminal, and since the rich text information is generally large, when the terminal uploads the rich text information to the server, too much data traffic is required.

### SUMMARY

In order to solve the problems in the related art, the present disclosure provides a method and a device for displaying information. The technical solutions are as follows.

According to a first aspect of embodiments of the present disclosure, there is provided a method for displaying information, including:
receiving an information display request of a terminal, the information display request carrying at least a target server identification and specified information, the target server identification being used to determine a target server for displaying the specified information;
processing the specified information to obtain rich text information of the specified information; and
sending a rich text display request to the target server, the rich text display request carrying at least the rich text information, such that the target server provides the rich text information.

The step of processing the specified information to obtain the rich text information of the specified information includes:
filling the specified information into a preset template to obtain the rich text information.

Different types of preset templates correspond to different types of rich text information, and the step of filling the specified information into the preset template to obtain the rich text information includes:
filling the specified information into a preset picture template to obtain a specified page corresponding to the specified information;
converting the specified page into a picture to obtain the rich text information; or,
filling the specified information into a preset audio template, to acquire an obtained audio file as the rich text information.

The information display request further carries a user account, and the method further includes:
determining, according to a corresponding relationship between a created user account and a target server count, whether the user account has a corresponding target server account; and
performing the step of processing the specified information, when the user account has the corresponding target server count.

Before the step of determining, according to the corresponding relationship between the created user account and the target server count, whether the user account has the corresponding target server account, the method further includes:
receiving a binding request of the terminal, the binding request carrying the user account of the terminal and the target server account and a password input by a user; and
establishing the corresponding relationship between the user account and the target server account.

The rich text information includes at least one of a static picture, a dynamic picture, or an audio file.

The target server is an instant messaging server or an information display server.

According to a second aspect of the embodiments of the present disclosure, there is provided a device for displaying information, including:
an information display request receiving module configured to receive an information display request of a terminal, the information display request carrying at least a target server identification and specified information, the target server identification being used to determine a target server for displaying the specified information;
a processing module configured to process the specified information to obtain rich text information of the specified information;
a display request sending module configured to send a rich text display request to the target server, the rich text display request carrying at least the rich text information, such that the target server provides the rich text information.

The processing module includes:
a processing unit configured to fill the specified information into a preset template to obtain the rich text information.

Different types of preset templates correspond to different types of rich text information, and the processing unit includes:
a first processing sub-unit configured to fill the specified information to a preset picture template to obtain a specified page corresponding to the specified information, and convert the specified page into a picture to obtain the rich text information; or,
a second processing sub-unit configured to fill the specified information to a preset audio template, to acquire an obtained audio file as the rich text information.

The information display request further carries a user account, and the device further includes:
a target account acquiring module configured to determine, according to a corresponding relationship between a created user account and a target server count, whether the user account has a corresponding target server account; and
an account processing module configured to perform the step of processing the specified information, when the user account has the corresponding target server count.

The device further includes:
a binding request receiving module configured to receive a binding request of the terminal, the binding request carrying the user account of the terminal and the target server account and a password input by a user; and
a corresponding relationship establishing module configured to establish the corresponding relationship between the user account and the target server account.

The rich text information includes at least one of a static picture, a dynamic picture, or an audio file.

The target server is an instant messaging server or an information display server.

According to a third aspect of the embodiments of the present disclosure, there is provided a program product having stored therein instructions that, when executed by one or more processors of the device as above, causes the device to perform:
receiving an information display request of a terminal, the information display request carrying at least a target server identification and specified information, the target server identification being used to determine a target server for displaying the specified information;
processing the specified information to obtain rich text information of the specified information; and
sending a rich text display request to the target server, the rich text display request carrying at least the rich text information, such that the target server provides the rich text information.

The technical solutions provided by the embodiments of the present disclosure may include advantageous effects as below.

In the method and the device provided by the embodiments of the present invention, the specified information is processed to obtain the rich text information of the specified information, thus phenomenas such as crash or getting stuck caused by the terminal processing the specified information are avoided, resources of the terminal are saved. Since the terminal sends the specified information to a process server without sending the rich text information to the process server, data traffic of the terminal is reduced.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

In order to more clearly explain the technical solutions in the present disclosure, a simple introduction to the drawings required for describing the embodiments will be given below. Obviously, the drawings described below only illustrate some embodiments of the present disclosure, and for those skilled in the art, other drawings may be obtained based on these drawings without inventive labor. The accompanying drawings described herein are included to provide a further understanding of the present disclosure, constitute a part of this application, and are not restrictive of the present disclosure. In the drawings:
Fig. 1 is a flow chart showing a method for displaying information, according to an illustrative embodiment;
Fig. 2 is a flow chart showing a method for displaying information, according to an illustrative embodiment;
Fig. 3 is a block diagram illustrating a device for displaying information, according to an illustrative embodiment; and
Fig. 4 is a block diagram illustrating a server, according to an illustrative embodiment.

The apparent embodiments of the present disclosure are illustrated by the above-mentioned drawings, and detailed descriptions will be given hereinafter. These drawings and literal descriptions do not intend to limit the scope of concept of the present disclosure in any manner, but to explain the concept of the present disclosure for those skilled in the art by referring to exemplary embodiments.

### DETAILED DESCRIPTION

In order to make purposes, technical solutions and advantages of the present disclosure more clear, hereinafter, the present disclosure will be further described in detail in conjunction with embodiments and the drawings. Herein, illustrative embodiments and their explanations of the present disclosure serve to explain the present disclosure, but do not limit the present disclosure.

The embodiments of the present disclosure provide a method, a device and a terminal apparatus for displaying information, and the present disclosure is explained in detail below in combination with the drawings.

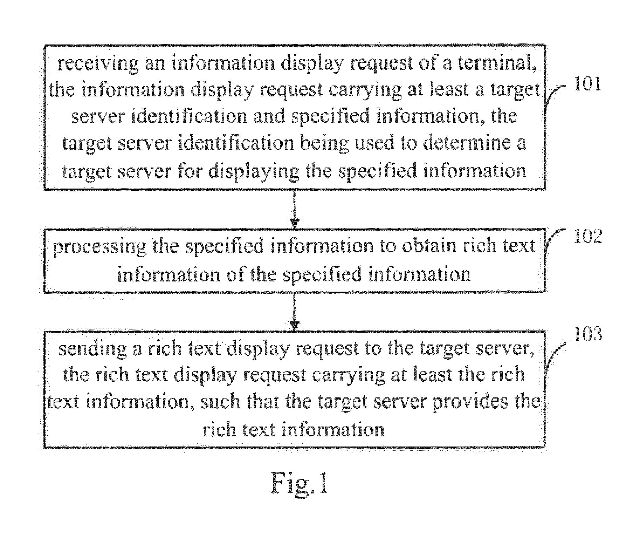

In one embodiment, Fig. 1 is an illustrative flow chart of a method for displaying information. Referring to Fig. 1, the method includes the following steps.

In step 101, an information display request of a terminal is received, the information display request carries at least a target server identification and specified information, the target server identification is used to determine a target server for displaying the specified information, the method of the present embodiment is used in a process server.

In step 102, the specified information is processed to obtain rich text information of the specified information.

In step 103, a rich text display request is sent to the target server, wherein the rich text display request carries at least the rich text information, such that the target server provides the rich text information.

In the method provided by the present embodiment, the specified information is processed by the process server to obtain the rich text information of the specified information, thus phenomenas such as crash or getting stuck caused by the terminal processing the specified information are avoided, resources of the terminal are saved. Since the terminal sends the specified information to the process server without sending the rich text information to the process server, data traffic s of the terminal is reduced.

The step of processing the specified information to obtain the rich text information of the specified information includes:
filling the specified information into a preset template to obtain the rich text information.

Different types of preset templates correspond to different types of rich text information, and the step of filling the specified information into the preset template to obtain the rich text information includes:
filling the specified information into a preset picture template to obtain a specified page corresponding to the specified information;
converting the specified page into a picture to obtain the rich text information; or,
filling the specified information into a preset audio template, to acquire an obtained audio file as the rich text information.

The information display request further carries a user account, and the method further includes:
determining, according to a corresponding relationship between a created user account and a target server count, whether the user account has a corresponding target server account; and
performing the step of processing the specified information, when the user account has the corresponding target server count.

Before the step of determining, according to the corresponding relationship between the created user account and the target server count, whether the user account has the corresponding target server account, the method further includes:
receiving a binding request of the terminal, the binding request carrying the user account of the terminal and the target server account and a password input by a user; and
establishing the corresponding relationship between the user account and the target server account.

The rich text information includes at least one of a static picture, a dynamic picture, or an audio file.

The target server is an instant messaging server or an information display server.

All of the above alternative technical solutions may be combined in any form to form alternative embodiments of the present invention, which are not described repeatedly.

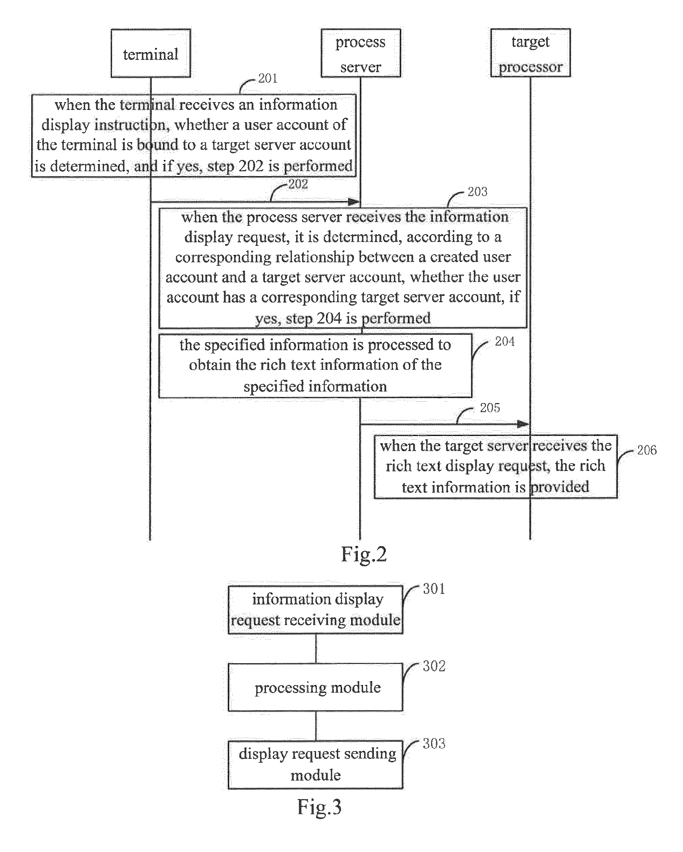

In one embodiment, Fig. 2 is an illustrative flow chart of a method for displaying information, the interaction main bodies thereof are a terminal, a process server and a target server. Referring to Fig. 2, the method includes the following steps.

In step 201, when the terminal receives an information display instruction, whether a user account of the terminal is bound to a target server account is determined, and if yes, step 202 is performed; and if no, the step is ended.

The target server account refers to an account registered on the target server, the target server is used to display rich text information, the target server may be an instant messaging server or an information display server such as a microblog server, a space server or a micro-blog server, or the target server may also be a function module in the instant messaging server or the information display server, which is not limited in the present embodiment.

The present embodiment is applied to a situation in which rich text information of specified information is displayed in an instant messaging software or on an information display platform. In the present embodiment, the terminal may provide sharing options such as "Share to Microblog", "Share to Space" or the like for a user to trigger the information display instruction. When the terminal detects the user's click operation to the "Share to Microblog", if the information display instruction is determined to be received, then whether the user account of the terminal is bound to the target server account is determined, that is, whether the user account of the terminal is bound to a microblog account is determined. In addition, the information display instruction may also be triggered by a request for modifying a personalized signature, a request for releasing the latest status on a personal homepage and the like, which is not limited in the present embodiment.

In the present embodiment, the step 201 is to determine whether the terminal is bound to the target server account, so as to determine whether the process server is required to provide the terminal with a converting service for the rich text information of the specified information in an information display process.

In the present embodiment, when the specified information is displayed, in order to have the target server display the specified information by using an identity of the target server account, whether the user account is bound to the target server account is required to be determined. When the process server binds the target server account to the user account, the terminal may add a bound identification for the user account. Correspondingly, the step 201 includes: when the terminal receives the information display instruction, determining whether the user account of the terminal has the bound identification, and if yes, performing step 202, and if no, ending the step

It is to be explained that the present embodiment is explained by the example in which whether the user account of the terminal is bound to the target server account is determined, but it may not be determined in a practical application, while step 202 may be directly performed, and it may be determined by the process server subsequently, , or the target server may directly display the rich text information of the specified information by using an identity of a tourist, which is not limited in the present embodiment.

It is to be further explained that, the present embodiment is explained by the example in which no operation is further performed when the user account of the terminal is not bound to the target server account, but in the practical application, after the step 201, the method may further include: when the user account of the terminal is determined to be not bound to the target server account, the terminal displaying an input interface of account information to remind the user to input the target server account required to be bound and the password; when the terminal acquires the target server account and the password input by the user, the terminal sending a binding request to the process server, the binding request carrying the target server account and the password input by the user, and when a binding success message sent from the process server is received, performing step 202.

In step 202, the terminal sends an information display request to the process server, the information display request carries a user account, specified information and a target server identification, the target server identification is used to determine a target server for displaying the specified information.

The specified information may be information in forms such as texts or pictures or the like, for example, the specified information may be information pre-selected or pre-input by the user before triggering the information display instruction, or the specified information may also be information input on an information display interface displayed by the terminal after triggering the information display instruction, which is not limited in the present embodiment. Moreover, the user account may be an identification of the terminal such as a phone number of the terminal, an apparatus serial number of the terminal, or the user account may also be a user account for logging in the terminal such as an apple ID or a Mione ID.

In the present embodiment, the target server identification is used to determine the target server for displaying the specified information, the target server identification may be a name of the target server or an address of the target server and the like, which is not limited in the present embodiment.

Correspondingly, since the sharing options selected by the user are different, the target server identifications carried by the information display requests are different, such that the target servers finally determined are different. For example, when the terminal detects that the user's click operation is an option of "Share to Microblog", the terminal sends the information display request to the process server, the target server identification carried by the information display request is "Microblog", then the target server finally determined is "Microblog", or, when the terminal detects that the user's click operation is "Share to Micro-letter", the terminal sends the information display request to the process server, the target server identification carried by the information display request is "Micro-letter", then the target server finally determined is the micro-letter server.

In the present embodiment, different target servers are determined according to different sharing options selected by the user, thereby the specified information in form of the rich text information can be displayed on different target servers.

In step 203, when the process server receives the information display request, it is determined, according to a corresponding relationship between a created user account and a target server account, whether the user account has a corresponding target server account, if yes, step 204 is performed; and if no, the step is ended.

In the present embodiment, in order to display the rich text information of the specified information, the rich text information is required to be generated. The process server is used to process the specified information to obtain the rich text information of the specified information. Moreover, in order to make the target server display the rich text information by using the identity of the target server account, the process server may determine whether the user account has the corresponding target server account before processing the specified information.

Different from the step 201, the step 203 is to determine whether the user account has the corresponding target server account, so as to acquire the target server account corresponding to the user account, thereby to subsequently display the rich text information according to the target server account.

According to the target server account reserved for the process server by the target server, the process server may automatically assign the corresponding target server account to each user account, and establish a corresponding relationship between the user account and the target server account, or when the process server receives the binding request of the terminal, the process server may also establish the corresponding relationship between the user account of the terminal and the target server account required to be bound, at this time, the target server account and the password required to be bound may be authorized by the target server.

Correspondingly, prior to the step 203, the method further includes: the process server receiving the binding request that carries the user account of the terminal and the target server account and the password input by the user of the terminal, and sending the target server account and the password to the target server; when receiving the target server account and the password, the target server authorizing according to the target server account and the password, when authentication is passed, the target server sending an authentication pass message to the process server; and the process server establishing the corresponding relationship between the user account and the target server account while receiving the authentication pass message.

The binding request may be triggered while the user clicks a binding option provided by the terminal, or may also be automatically triggered when the terminal receives the information display instruction and determines that the user account doesn't have the bound target server account, which is not limited in the present embodiment.

In the present embodiment, when receiving the binding request of the terminal, the process server establishes the corresponding relationship between the user account and the target server account; and when receiving the information display request of the terminal, the process server may determine the target server account corresponding to the user account according to the corresponding relationship, so that the target server finally can display the rich text information of the specified information by using the identity of the target server account.

Furthermore, in the present embodiment, the corresponding relationship may also be established by the terminal; and when sending the information display request to the process server, the terminal sends the target server account corresponding to the user account, so that the target server finally can also display the rich text information of the specified information by using the identity of the target server account, the present embodiment does not limit whether the corresponding relationship is established by the terminal or the process server.

It is to be explained that, the present embodiment is explained by the example in which no operation is further performed when it is determined that the user account has no corresponding target server account, but in the practical application, when it is determined that the user account has no corresponding target server account, the process server may also send an account processing failure message to the terminal, so that the terminal displays the input interface of the account information, and acquires again the target server account and the password required to be bound by the user, which is not limited in the present embodiment.

In step 204, the process server processes the specified information to obtain the rich text information of the specified information.

In the present embodiment, a template of the rich text information may be preset, the specified information is processed according to the preset template, that is, the step 204 includes: the process server filling the specified information into the preset template to obtain the rich text information.

Wherein the rich text information includes at least one of a static picture, a dynamic picture, or an audio file generated according to the specified information, and different types of preset templates may correspond to different types of rich text information, correspondingly, the step 204 may include one of the following steps.
(1) The process server fills the specified information into a preset picture template to obtain a specified page corresponding to the specified information, and converts the specified page into a picture to obtain the rich text information;
   wherein the preset picture template may be a HTML (Hyper Text Markup Language) template, that is, the step (1) further includes the process server filling the specified information into the HTML template to obtain a HTML page, and converting the HTML page into rich text information in picture format.
(2) The process server fills the specified information into a preset audio template, to acquire an obtained audio file as the rich text information.

In the present embodiment, the process server may covert the specified information into audio information, fill the audio information into the preset audio template to obtain the audio file, and acquire the audio file as the rich text information.

In the present embodiment, the process server may send different types of preset templates to the terminal, the terminal displays the different types of preset templates, and uses a preset template selected by the user as a preset template of the specified information, when detecting the user's selection operation.

For example, the process server sends preset templates of music, a static picture, and a dynamic picture to the terminal, the terminal displays the received preset templates. When the terminal detects the user selects the preset template of the dynamic picture, the terminal acquires the preset template of the dynamic picture as the preset template of the specified information, and informs the process server of this matter, so that the process server may process the specified information according to the preset template of the dynamic picture to generate the dynamic picture, and use the generated dynamic picture as the rich text information.

Further, the preset templates may dynamically change along with subjects such as reasons, holidays, or birthdays. For example, during the Mid-Autumn Festival, a template themed with the Mid-Autumn Festival may be set, or by determining the user's birthday according to related information of the target server account of the user, a template themed with celebration of birthday is specifically set for the user on the user's birthday.

Different from updating the preset templates by updating a version of the instant messaging software or an information display platform software, in the present embodiment, by dynamically updating the preset templates, the form of the rich text information may be updated without updating the entire software, thus diversified needs of the user can be satisfied, and user operation is simplified.

In step 205, the process server sends the rich text display request to the target server, wherein the rich text display request carries the rich text information and the target server account.

In the present embodiment, the rich text display request carries the target server account, so that the target server may display the rich text information by using the identity of the target server account.

Certainly, the rich text display request may not carry the target server account, and the target server displays the rich text information by using the identity of the tourist.

In step 206, when the target server receives the rich text display request, the target server provides the rich text information, and the step is ended.

Different target servers provide the rich text information in different ways, with respect to the different target servers, the step 206 may use any one of the following ways.
(1) The target server is the instant messaging server, and when the instant messaging server receives the rich text display request, in a friend circle link corresponding to the instant messaging server, the rich text information is displayed by using the identity of the target server account, or the rich text information is displayed in the personalized signature of the target server account.
   Taking the micro-letter server as an example, the micro-letter server, when receiving the rich text display request, may display the rich text information by using the identity of the target server account in a friend circle of the micro-letter, or display the rich text information in the personalized signature of the target server account.
(2) The target server is the information display server, and when the information display server receives the rich text display request, the rich text information is displayed by using the identity of the target server account on the information display platform corresponding to the information display server.

Taking the microblog server as an example, the microblog server, when receiving the rich text display request, may display the rich text information on a personal microblog webpage corresponding to the target server account.

For different types of rich text information, the target server displays the rich text information in different ways, for the static picture, the target server may directly display the static picture, and for the dynamic picture, the target server may display a thumbnail picture of the dynamic picture, and when the user clicks the thumbnail picture, the dynamic picture is displayed, the present embodiment does not limit a specific way of the rich text information.

In the method provided by the present embodiment, the specified information is processed by the process server to obtain the rich text information of the specified information, thus phenomenas such as crash or getting stuck caused by the terminal processing the specified information are avoided, resources of the terminal are saved, Since the terminal sends the specified information to the process server without sending the rich text information to the process server, data traffic spent by the terminal is reduced; meanwhile, dynamical update of the preset templates may be realized without updating the software, thus diversified needs of the user can be satisfied, and user operation is simplified.

Fig. 3 is an illustrative block diagram of a device for displaying information. Referring to Fig. 3, the device includes an information display request receiving module 301, a processing module 302 and a display request sending module 303.

the information display request receiving module 301 is configured to receive an information display request of a terminal, wherein the information display request carries at least a target server identification and specified information, and the target server identification is used to determine a target server for displaying the specified information; the processing module 302 is connected with the information display request receiving module 301, and is configured to process the specified information to obtain rich text information of the specified information; and the display request sending module 303 is connected with the processing module 302, and is configured to send a rich text display request to the target server, wherein the rich text display request carries at least the rich text information, such that the target server provides the rich text information.

In the device provided by the embodiment of the present invention, the specified information is processed to obtain the rich text information of the specified information, thus phenomenas such as crash or getting stuck caused by the terminal processing the specified information are avoided, resources of the terminal are saved. Since the terminal sends the specified information to the process server without sending the rich text information to the process server, data traffic of the terminal is reduced.

The processing module 302 includes:
a processing unit configured to fill the specified information into a preset template to obtain the rich text information.

Different types of preset templates correspond to different types of rich text information, and the processing unit includes:
a first processing sub-unit configured to fill the specified information to a preset picture template to obtain a specified page corresponding to the specified information, and convert the specified page into a picture to obtain the rich text information; or,
a second processing sub-unit configured to fill the specified information to a preset audio template, to acquire an obtained audio file as the rich text information.

The information display request further carries a user account, and the device further includes:
a target account acquiring module configured to determine, according to a corresponding relationship between a created user account and a target server count, whether the user account has a corresponding target server account;
an account processing module configured to perform the step of processing the specified information, when the user account has the corresponding target server count.

The device further includes:
a binding request receiving module configured to receive a binding request of the terminal, the binding request carrying the user account of the terminal and the target server account and a password input by a user; and
a corresponding relationship establishing module configured to establish the corresponding relationship between the user account and the target server account.

The rich text information includes at least one of a static picture, a dynamic picture, or an audio file.

The target server is an instant messaging server or an information display server.

It is to be explained that when the device for displaying information provided by the above embodiments displays information, the division of the modules with functions as above is described only for illustration, and in actual applications, the above functions may be implemented by different modules as needed. That is, the internal structure of the device is divided into different modules, to realize all or a part of the above-described functions. In addition, the device for displaying information provided by the above embodiments belongs to the same inventive concept as that of the method for displaying information, and the specific implementing processes thereof may be found in the embodiments of the method, which are not described repeatedly.

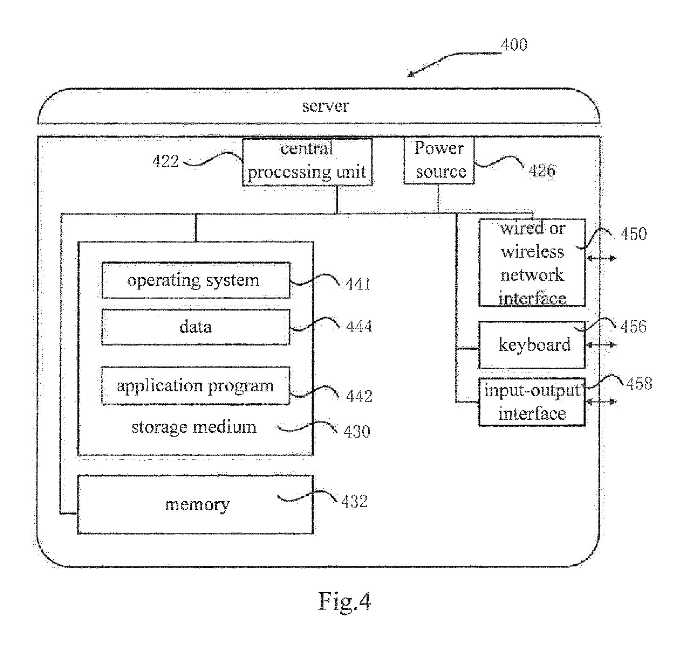

Fig. 4 is an illustrative block diagram of a server. The server 400 may be relatively large different due to different configuration or properties, and may include one or more CPU (central processing units) 422 (e.g., one or more processors) and a memory 432, one or more storage media 430 storing application programs 442 or data 444 (e.g., one or more mass storage devices). The storage medium 430 and the memory 432 may store temporarily or permanently. The program stored in the storage medium 430 may include one or more modules (not shown in this drawing), each module may include a series of instructions for operating the server. Further, the CPU 422 may be configured to communicate with the store medium 430, a series of instructions of the storage medium 430 are executed on the server 400.

The server 400 may also include one or more power sources 426, one or more wired or wireless network interfaces 450, one or more input-output interfaces 458, one or more keyboards 456, and/or one or more operating systems 441 such as Windows ServerTM, Mac OS XTM, UnixTM, LinuxTM, FreeBSDTM and the like.

The steps performed by the process server in the above embodiments may be based on the structure of the server shown in Fig. 4.

In addition, the terminal according to the present disclosure may typically be various handheld terminal apparatuses, such as a mobile phone, a personal digital assistant (PDA) and the like. Therefore, the scope of the present disclosure is not limited to a particular type of mobile terminal.

In addition, the method according to the present disclosure may also be implemented by a computer program executed by a CPU. When executed by the CPU, the computer program performs the above functions defined in the method according to the present disclosure.

In addition, the above steps of the method and the units of the system may also be implemented with a controller and a computer-readable storage device which stores computer programs that cause the controller to realize the above steps and functions of the units.

In addition, it should be appreciated that the above mentioned computer-readable storage device (such as storage) may be a volatile memory or a nonvolatile memory, or may include the both. For example, but without limitation, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM) which may serve as an external cache RAM memory. As an example, but without limitation, the RAM may be of various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but not limited to these and other suitable types of memories.

It should be appreciated by those skilled in the art that, various exemplary logical blocks, modules, circuits, and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. Whether such functions will be implemented as software or hardware depends on the particular application and the restriction from the design of the whole system. Those functions may be realized in various means for each of the particular application by those skilled in the art without departing the scope of the present disclosure.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic devices, discrete gates or transistor logics, discrete hardware components or any combination of these components. The general purpose processor may be a microprocessor. Alternatively, the processor may be any one of a conventional processor, a controller, a microcontroller, or a state machine. The processor may be implemented as combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in combination of the both. The software module may reside in a RAM memory, a flash memory, a ROM memory, an EPROM memory, an EEPROM memory, a registers, a hard disk, a removable disk, a CD-ROM, or any other storage media known in the art. An exemplary storage medium is coupled to the processor such that the processor can read information from the storage medium or write information thereto. In an alternative embodiment, the storage medium may be integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware, or any combination thereof. If implemented in software, the above functions may be stored in a computer readable medium as one or more instructions or codes, or transmitted through the computer readable medium. The computer readable medium includes computer storage medium and communication medium. The communication media includes any medium that may be used to transmit computer programs from one location to another location. The storage medium may be any available medium that is accessible by a general or special computer. For example, but without limitation, the computer readable medium may include a RAM, a ROM, an EEPROM, a CD-ROM or other CD storage devices, disk storage device or other magnetic storage devices, or any other medium that may be used to carry or store the required program codes in a form of instructions or data structure and may be accessible by a general or special computer or a general or special processor. In addition, any connection may be appropriately called as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all within the definition of the medium. As used herein, the disk and the optical disk include a compression disk (CD), a laser disc, an optical disk, a digital versatile disc (DVD), a floppy disks, a blue-ray disk, among which the magnetic disk normally represents data magnetically, and the optical disk represents data optically by utilizing a laser. The combination of the above contents should also be included in the scope of the computer readable medium.

In an exemplary embodiment, there is provided a program product having stored therein instructions that, when executed by one or more processors of the device as above, causes the device to perform:
receiving an information display request of a terminal, the information display request carrying at least a target server identification and specified information, the target server identification being used to determine a target server for displaying the specified information;
processing the specified information to obtain rich text information of the specified information; and
sending a rich text display request to the target server, the rich text display request carrying at least the rich text information, such that the target server provides the rich text information.

Although the exemplary embodiments of the present disclosure has been illustrated in the above contents, it should be noted that, various changes and modifications may be made without departing the scope of the present disclosure that is defined by the claims. The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

The objects, technical solutions and advantageous effects of the present disclosure have been explained in a further detail with the above specific embodiments. It should be appreciated that, the above are merely specific embodiments of the present disclosure, and not used to limit the scope of the present disclosure. Any alteration, equivalent replacement, modification and the like should be embraced in the protection scope of the present disclosure.

## Claims

1. A method for displaying information, **characterized in that**, the method comprises:
receiving (101) an information display request of a terminal, the information display request carrying at least a target server identification and specified information, the target server identification being used to determine a target server for displaying the specified information;
processing (102) the specified information to obtain rich text information of the specified information; and
sending (103) a rich text display request to the target server, the rich text display request carrying at least the rich text information, such that the target server provides the rich text information.

2. The method according to claim 1, **characterized in that** the step of processing the specified information to obtain the rich text information of the specified information comprises:
filling the specified information into a preset template to obtain the rich text information.

3. The method according to claim 2, **characterized in that** different types of preset templates correspond to different types of rich text information, and the step of filling the specified information into the preset template to obtain the rich text information comprises:
filling the specified information into a preset picture template to obtain a specified page corresponding to the specified information;
converting the specified page into a picture to obtain the rich text information; or,
filling the specified information into a preset audio template, to acquire an obtained audio file as the rich text information.

4. The method according to claim 1, **characterized in that** the information display request further carries a user account, and the method further comprises:
determining (203), according to a corresponding relationship between a created user account and a target server count, whether the user account has a corresponding target server account; and
performing (204) the step of processing the specified information, when the user account has the corresponding target server count.

5. The method according to claim 4, **characterized in that** before the step of determining, according to the corresponding relationship between the created user account and the target server count, whether the user account has the corresponding target server account, the method further comprises:
receiving a binding request of the terminal, the binding request carrying the user account of the terminal and the target server account and a password input by a user; and
establishing the corresponding relationship between the user account and the target server account.

6. The method according to claims 1-5, **characterized in that** the rich text information comprises at least one of a static picture, a dynamic picture, or an audio file.

7. The method according to claims 1-5, **characterized in that** the target server is an instant messaging server or an information display server.

8. A device for display information, **characterized in that** the device comprises:
an information display request receiving module (301) configured to receive an information display request of a terminal, the information display request carrying at least a target server identification and specified information, the target server identification being used to determine a target server for displaying the specified information;
a processing module (302) configured to process the specified information to obtain rich text information of the specified information; and
a display request sending module (303) configured to send a rich text display request to the target server, the rich text display request carrying at least the rich text information, such that the target server provides the rich text information.

9. The device according to claim 8, **characterized in that** the processing module comprises:
a processing unit configured to fill the specified information into a preset template to obtain the rich text information.

10. The device according to claim 9, **characterized in that** different types of preset templates correspond to different types of rich text information, and the processing unit comprises:
a first processing sub-unit configured to fill the specified information into a preset picture template to obtain a specified page corresponding to the specified information, and convert the specified page into a picture to obtain the rich text information; or,
a second processing sub-unit configured to fill the specified information to a preset audio template, to acquire an obtained audio file as the rich text information.

11. The device according to claim 8, **characterized in that** the information display request further carries a user account, and the device further comprises:
a target account acquiring module configured to determine, according to a corresponding relationship between a created user account and a target server count, whether the user account has a corresponding target server account; and
an account processing module configured to perform the step of processing the specified information, when the user account has the corresponding target server count.

12. The device according to claim 11, **characterized in that** the device further comprises:
a binding request receiving module configured to receive a binding request of the terminal, the binding request carrying the user account of the terminal and the target server account and a password input by a user; and
a corresponding relationship establishing module configured to establish the corresponding relationship between the user account and the target server account.

13. The device according to claims 8-12, **characterized in that** the rich text information comprises at least one of a static picture, a dynamic picture, or an audio file.

14. The device according to claims 8-12, **characterized in that** the target server is an instant messaging server or an information display server.

15. A program product having stored therein instructions, **characterized in that**, when executed by one or more processors of the device according to claim 8, causes the device to perform:
receiving an information display request of a terminal, the information display request carrying at least a target server identification and specified information, the target server identification being used to determine a target server for displaying the specified information;
processing the specified information to obtain rich text information of the specified information; and
sending a rich text display request to the target server, the rich text display request carrying at least the rich text information, such that the target server provides the rich text information.
